(19) **Europäisches Patentamt / European Patent Office / Office européen des brevets**

(11) **EP 4 617 997 A1**

(12) **EUROPEAN PATENT APPLICATION**
published in accordance with Art. 153(4) EPC

(43) Date of publication:
**17.09.2025 Bulletin 2025/38**

(21) Application number: **23887428.3**

(22) Date of filing: **30.05.2023**

(51) International Patent Classification (IPC):
**G06T 5/00** (2024.01)

(52) Cooperative Patent Classification (CPC):
**G06T 5/00; G06T 5/90**

(86) International application number:
**PCT/CN2023/096994**

(87) International publication number:
**WO 2024/098729 (16.05.2024 Gazette 2024/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.11.2022 CN 202211414884**

(71) Applicant: **Zhejiang Uniview Technologies Co., Ltd.**
**Hangzhou, Zhejiang 310051 (CN)**

(72) Inventors:
• **LI, Huilin**
  **Hangzhou, Zhejiang 310051 (CN)**
• **XU, Yuan**
  **Hangzhou, Zhejiang 310051 (CN)**
• **CHEN, Kaize**
  **Hangzhou, Zhejiang 310051 (CN)**

(74) Representative: **Müller-Boré & Partner**
**Patentanwälte PartG mbB**
**Friedenheimer Brücke 21**
**80639 München (DE)**

(54) **IMAGE PROCESSING METHOD AND APPARATUS, AND DEVICE AND STORAGE MEDIUM**

(57)    Provided are an image processing method, apparatus, and device, and a storage medium. The image processing method includes: if a historical image frame is determined as an overexposed image frame according to historical brightness data of the historical image frame collected by an image collector, continuing image collection by using a preset image collection parameter to obtain an underexposed image frame; processing a target region of the underexposed image frame based on at least one preset image gain parameter and determining statistical brightness data of the target region processed based on the at least one preset image gain parameter; determining a target image gain parameter according to the statistical brightness data, preset brightness data, and the at least one preset image gain parameter and determining a target image collection parameter according to the target image gain parameter and the preset image collection parameter to continue the image collection according to the target image collection parameter.

**FIG. 1**

**Description**

This application claims priority to Chinese Patent Application No. 202211414884.6 filed with the China National Intellectual Property Administration (CNIPA) on Nov. 11, 2022, the disclosure of which is incorporated herein by reference in its entirety.

TECHNICAL FIELD

The present application relates to the technical field of image processing, for example, to an image processing method, apparatus, and device, and a storage medium.

BACKGROUND

With the development of image processing technology, people have placed a higher demand on image presentation effects. At present, entrances and exits of many parking lots are equipped with license plate recognition cameras. Due to the influence of daytime sunlight or night lights, an image is overexposed sometimes, resulting in the unclear recognition of a license plate. Overexposure refers to a phenomenon in which the image brightness is too high due to excessive exposure. To address the image overexposure, a conventional practice is to recognize the position of a license plate, compare brightness at the position with the preset ideal brightness, and then adjust the exposure. However, since the exposure exceeds the dynamic range of a camera, continuous feedback and adjustment are required, and the exposure adjustment is usually continuous, which may require dozens of frames or even more. Therefore, the duration for the exposure adjustment is long and the speed for the exposure adjustment is slow, which cannot meet the actual application requirements well.

SUMMARY

The present application provides an image processing method, apparatus, and device, and a storage medium so that the accurate exposure of the next frame of image can be determined through a single underexposed image frame, effectively improving the efficiency and accuracy of image exposure adjustment.

According to an aspect of the present application, an image processing method is provided. The image processing method includes the steps below.

In a case where a historical image frame is determined as an overexposed image frame according to historical brightness data of the historical image frame collected by an image collector, image collection is continued by using a preset image collection parameter to obtain an underexposed image frame.

A target region of the underexposed image frame is processed based on at least one preset image gain parameter, and statistical brightness data of the target region processed based on the at least one preset image gain parameter is determined.

A target image gain parameter is determined according to the statistical brightness data, preset brightness data, and the at least one preset image gain parameter, and a target image collection parameter is determined according to the target image gain parameter and the preset image collection parameter to continue the image collection according to the target image collection parameter.

According to another aspect of the present application, an image processing apparatus is provided. The image processing apparatus includes an underexposed image frame determination module, a statistical brightness data determination module, and a target image collection parameter determination module.

The underexposed image frame determination module is configured to, in a case where a historical image frame is determined as an overexposed image frame according to historical brightness data of the historical image frame collected by an image collector, continue image collection by using a preset image collection parameter to obtain an underexposed image frame.

The statistical brightness data determination module is configured to process a target region of the underexposed image frame based on at least one preset image gain parameter and determine statistical brightness data of the target region processed based on the at least one preset image gain parameter.

The target image collection parameter determination module is configured to determine a target image gain parameter according to the statistical brightness data, preset brightness data, and the at least one preset image gain parameter and determine a target image collection parameter according to the target image gain parameter and the preset image collection parameter to continue the image collection according to the target image collection parameter.

According to another aspect of the present application, an image processing electronic device is provided. The electronic device includes at least one processor and a memory communicatively connected to the at least one processor, where the memory is configured to store a computer program executable by the at least one processor to cause the at least one processor to perform the preceding image processing method.

According to another aspect of the present application, a computer-readable storage medium is provided. The computer-readable storage medium stores computer instructions that, when executed by a processor, are configured to cause the processor to perform the preceding image processing method.

BRIEF DESCRIPTION OF DRAWINGS

FIG. 1 is a flowchart of an image processing method according to embodiment one of the present application.

FIG. 2 is a flowchart of an image processing method according to embodiment two of the present application.

FIG. 3A is a schematic diagram of a target region in an underexposed image frame according to embodiment two of the present application.

FIG. 3B is a schematic diagram of a target region after sub-region processing according to embodiment two of the present application.

FIG. 4 is a schematic diagram illustrating the structure of an image processing apparatus according to embodiment three of the present application.

FIG. 5 is a schematic diagram illustrating the structure of an electronic device for performing an image processing method according to embodiment four of the present application.

DETAILED DESCRIPTION

Technical solutions in embodiments of the present application are described in conjunction with the drawings in the embodiments of the present application. The embodiments described herein are part, not all, of the embodiments of the present application.

Terms such as "first", "second", and "target" in the description, claims, and drawings of the present application are used for distinguishing between similar objects and are not necessarily used for describing a particular order or sequence. Data used in this manner are interchangeable where appropriate so that the embodiments of the present application described herein can be implemented in an order not illustrated or described herein. In addition, terms "including", "having", and any variations thereof are intended to encompass a non-exclusive inclusion. For example, a process, method, system, product, or device that includes a series of steps or units not only includes the expressly listed steps or units but may also include other steps or units that are not expressly listed or are inherent to such process, method, product, or device.

Embodiment one

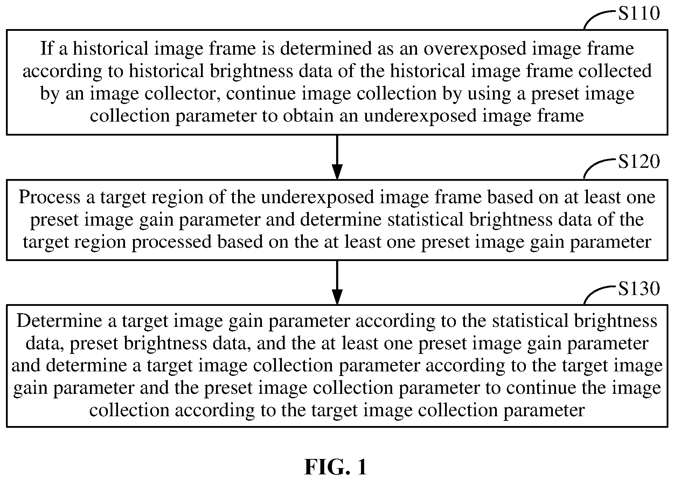

FIG. 1 is a flowchart of an image processing method according to embodiment one of the present application. This embodiment is applicable to the case where the exposure of an image is adjusted quickly and accurately. The method may be executed by an image processing apparatus. The image processing apparatus may be implemented in the form of hardware and/or software. The image processing apparatus may be configured in an electronic device having a data processing capability. As shown in FIG. 1, the image processing method includes the steps described below.

In S110, if a historical image frame is determined as an overexposed image frame according to historical brightness data of the historical image frame collected by an image collector, image collection is continued by using a preset image collection parameter to obtain an underexposed image frame.

The image collector may refer to a device capable of performing image collection, such as a video camera, a network camera, or a digital camera. The historical image frame may refer to an image frame collected before the current moment. The historical brightness data may be used for representing the image brightness of the historical image frame. The overexposed image frame may refer to an image frame whose image brightness is too high due to excessive exposure. The preset image collection parameter may refer to a preset image collection parameter to obtain the underexposed image frame and may be used for controlling a reduction in image exposure. In an embodiment, preset image collection parameters may include a preset shutter speed, a preset image sensor gain, and a preset aperture number. Image sensor gains may refer to the gains output by an image sensor and include an analog gain and a digital gain. The underexposed image frame may refer to an image frame whose image brightness is too low due to too little exposure.

In this embodiment, the corresponding historical brightness data is first determined according to the historical image frame collected by the image collector. Exemplarily, the historical image frame may be first converted into the Y'UV color space, and the brightness values of multiple pixel points in the historical image frame may be determined based on the value of the Y' channel. Subsequently, the brightness values of the multiple pixel points in the historical image frame are weighted and summed, and the weighted summation result is determined as the historical brightness data of the historical image frame. If the historical brightness data of the historical image frame is greater than a preset brightness threshold, the historical image frame is determined as the overexposed image frame. The preset brightness threshold may refer to a preset brightness data reference value to represent image overexposure.

If the historical image frame is determined as the overexposed image frame, the image collection is continued according to the preset image collection parameters to obtain the underexposed image frame. Exemplarily, in the daytime state, the preset image collection parameters may be set as follows: the preset shutter speed is 1/10000 s, the preset image sensor gain is 0 dB (one times), and the preset aperture number is $1/(1.6)^2$; in the night state, the preset image collection parameters may be set as follows: the preset shutter speed is 1/500 s, the preset image sensor gain is 0 dB (one times), and the preset aperture number is $1/(1.6)^2$.

Due to the dynamic range and a data bit limit of the image collector, such as 8 bits, the maximum brightness of an image cannot exceed 255. When the image is overexposed, the values of pixels with the actual brightness greater than 255 overflow, but only 255 can be displayed in the image at most with the actual brightness unknown, so the exposure cannot be adjusted in one go. Exemplarily, assuming that the actual brightness of pixel A is more than twice 255 and that the actual brightness of pixel B is 200, if the exposure (shutter, aperture, or gain) is directly halved, the brightness of pixel B is adjusted from the original 200 to 100 while the brightness of pixel A is still displayed as 255. In this case, the actual brightness of pixel A cannot be known. Therefore, in this technical solution, the underexposed image frame determination is required to make the brightness of all the pixels at a low level for brightness simulation of a target region, thereby minimizing brightness overflow.

In S120, a target region of the underexposed image frame is processed based on at least one preset image gain parameter, and statistical brightness data of the target region processed based on the at least one preset image gain parameter is determined.

The preset image gain parameter may refer to a preset image signal processing (ISP) gain parameter. The ISP may be understood as an image processing module carried by an image collector chip and may be used for processing original image data output by the image sensor at high speed to achieve better image quality. An ISP gain may be understood as an amplification processing performed by the ISP module on the original image data output by the image sensor, that is, the original image data is multiplied by a certain amplification factor. The statistical brightness data may be used for representing the image brightness corresponding to the target region processed based on the at least one preset image gain parameter.

In this embodiment, the target region of the underexposed image frame may be processed at least once according to the at least one preset image gain parameter, that is, the target region of the underexposed image frame is processed once according to each preset image gain parameter. The target region may also be divided into blocks first, and then a region of each block is processed using a different preset image gain parameter so that processing results corresponding to different preset image gain parameters can be presented through one image processing. Exemplarily, the target region of the underexposed image frame may be processed by adopting a gamma correction method.

In an embodiment, processing the target region of the underexposed image frame based on the at least one preset image gain parameter and determining the statistical brightness data of the target region processed based on the at least one preset image gain parameter include traversing the at least one preset image gain parameter and in the traversal process, processing the target region of the underexposed image frame based on each preset image gain parameter; determining an average brightness value of multiple pixel points in the target region processed based on each preset image gain parameter as the statistical brightness data of the target region processed based on each preset image gain parameter.

In this embodiment, the at least one preset image gain parameter may be traversed, and in the traversal process, the target region of the underexposed image frame is processed based on each preset image gain parameter; the brightness of the multiple pixel points in the target region processed based on each preset image gain parameter is weighted and averaged to determine the average brightness value of the multiple pixel points in the target region processed and use the average brightness value as the statistical brightness data of the target region processed based on each preset image gain parameter. Exemplarily, assuming that the at least one preset image gain parameter is G1, G2, G3, and G4, the target region is first processed based on G1, and the brightness of the multiple pixel points in the target region processed based on G1 is weighted and averaged to obtain statistical brightness data Y1 of the target region corresponding to G1; the target region is processed based on G2, and the brightness of the multiple pixel points in the target region processed based on G2 is weighted and averaged to obtain statistical brightness data Y2 of the target region corresponding to G2; the target region is processed based on G3, and the brightness of the multiple pixel points in the target region processed based on G3 is weighted and averaged to obtain statistical brightness data Y3 of the target region corresponding to G3; the target region is processed based on G4, and the brightness of the multiple pixel points in the target region processed based on G4 is weighted and averaged to obtain statistical brightness data Y4 of the target region corresponding to G4.

In this solution, by adopting this configuration, the target region of the underexposed image frame is processed in a manner of traversing the at least one preset image gain parameter to subsequently determine the statistical brightness data of the target region processed.

In S130, a target image gain parameter is determined according to the statistical brightness data, preset brightness data, and the at least one preset image gain parameter, and a target image collection parameter is determined according to the target image gain parameter and the preset image collection parameter to continue the image collection according to the target image collection parameter.

The preset brightness data may be preset ideal brightness data of the image. For example, the preset brightness data may be set as 100. The target image gain parameter may be an image gain parameter corresponding to statistical brightness data closest to the preset brightness data, that is, the image gain parameter corresponding to the statistical brightness data with the minimum difference from the preset brightness data. The target image collection parameter may refer to an image collection parameter corresponding to the statistical brightness data with the minimum difference from the preset brightness data and may be used for adjusting the image exposure. In an embodiment, target image collection parameters may include a target shutter speed, a target image sensor gain, and a target aperture number.

Since there are certain differences in the brightness statistics of different target regions, and there are slight differences in local and global brightness conversions in the same target region, the brightness simulation of the target region is required to have a certain distribution range. Therefore, two times to five times may be selected for each preset image gain parameter to ensure that the brightness of the target region is greater than or equal to a preset brightness reference value after the maximum preset image gain parameter is applied to the brightness of the target region. After the target region is actually processed based on the at least one preset image gain parameter, the actual brightness of the target region may be lower than the brightness after the target region is theoretically processed based on the at least one preset image gain parameter. Therefore, the preset brightness reference value is configured to be larger than the preset brightness data so that statistical brightness data of the target region processed by using the minimum preset image gain parameter can be ensured to be larger than the preset brightness data, and statistical brightness data of the target region processed by using the maximum preset image gain parameter can be ensured to be smaller than the preset brightness data, and so that the multiple statistical brightness data of the target region can have a certain distribution range, thereby finding the statistical brightness data closest to the preset brightness data within the distribution range.

In this embodiment, after the statistical brightness data of the target region processed is obtained, the target image gain parameter may be determined according to the statistical brightness data, the preset brightness data, and the at least one preset image gain parameter. Exemplarily, a preset image gain parameter corresponding to the statistical brightness data closest to the preset brightness data may be selected as the target image gain parameter so that the difference between the preset image gain parameter and the target image gain parameter can be minimized. Therefore, the target image collection parameter can be determined according to the target image gain parameter and the preset image collection parameter, and the image collection can be continued according to the target image collection parameter.

In an embodiment, determining the target image collection parameter according to the target image gain parameter and the preset image collection parameter includes adjusting at least one of the preset shutter speed, the preset image sensor gain, or the preset aperture number to obtain the target shutter speed, the target image sensor gain, and the target aperture number to enable the product of the target shutter speed, the target image sensor gain, and the target aperture number to be equal to the product of the target image gain parameter, the preset shutter speed, the preset image sensor gain, and the preset aperture number.

In this embodiment, the at least one of the preset shutter speed, the preset image sensor gain, or the preset aperture number may be adjusted to make the product of the target shutter speed, the target image sensor gain, and the target aperture number equal to the product of the target image gain parameter, the preset shutter speed, the preset image sensor gain, and the preset aperture number, thereby obtaining the target shutter speed, the target image sensor gain, and the target aperture number. Exemplarily, the target shutter speed may be determined as the preset shutter speed, the target image sensor gain may be determined as the preset image sensor gain, and the product of the target image gain parameter and the preset aperture number may be determined as the target aperture number, thereby quickly and accurately determining the target image collection parameter.

In this solution, by adopting this configuration, the target image collection parameter can be determined quickly and accurately according to the target image gain parameter and the preset image collection parameter.

In the technical solutions provided in the embodiments of the present application, if the historical image frame is determined as the overexposed image frame according to the historical brightness data of the historical image frame collected by the image collector, the image collection is continued by using the preset image collection parameter to obtain the underexposed image frame; the target region of the underexposed image frame is processed based on the at least one preset image gain parameter, and the statistical brightness data of the target region processed based on the at least one preset image gain parameter is determined; the target image gain parameter is determined according to the statistical brightness data, the preset brightness data, and the at least one preset image gain parameter, and the target image collection parameter is determined according to the target image gain parameter and the preset image collection parameter to continue the image collection according to the target image collection parameter. In this technical solution, the accurate exposure of the next frame of image can be determined through a single underexposed image frame, without multiple feedback and adjustment processes, effectively improving the efficiency and accuracy of image exposure adjustment.

In an embodiment, the determination process of the target region of the underexposed image frame includes determining the moving speed of a target region in the historical image frame according to the historical image frame and an image frame adjacent to the historical image frame; predicting the position of the target region in the underexposed image frame according to the moving speed and one of the position of the target region in the historical image frame or the position of the target region in the image frame adjacent to the historical image frame, where the underexposed image frame is an image frame after the historical image frame and the image frame adjacent to the historical image frame.

The target region may be understood as a region of interest in the image. For example, if the license plate information of a vehicle is required, a region including a license plate in a vehicle image collected by the image collector may be used as the target region.

In this embodiment, after the historical image frame is determined as the overexposed image frame, displacement pixels of the target region may be estimated according to the historical image frame and the image frame adjacent to the historical image frame, thereby determining the moving speed of the target region in the historical image frame. The image frame adjacent to the historical image frame may be the previous image frame of the historical image frame or the next image frame of the historical image frame. When the moving speed of the target region in the historical image frame is determined according to the historical image frame and the previous image frame of the historical image frame, it is required to be ensured that the target region or a target object (such as a vehicle) including the target region (such as a license plate region) appears in the previous image frame of the historical image frame. The position of the target region in the underexposed image frame may be predicted according to the moving speed and one of the position of the target region in the historical image frame or the position of the target region in the image frame adjacent to the historical image frame. The underexposed image frame is the image frame after the historical image frame and the image frame adjacent to the historical image frame. The interval duration between two adjacent frames of images is usually 1/25 s or 1/50 s (the frame interval is short), so the displacement, moving speed, and deformation between the two adjacent frames of images are approximately the same.

In addition, the preceding determination process of the target region of the underexposed image frame applies to the case where the image collector has a poor recognition ability of the target region, that is, the target region cannot be recognized in the underexposed image frame. If the image collector has a strong recognition ability of the target region, for example, the image collector can recognize the target region in the underexposed image frame according to the target contour information, the preceding determination process of the target region of the underexposed image frame may be skipped, and when the next image frame of the historical image frame is collected, the image collection parameter of the image collector is directly changed to the preset image collection parameter to be used for the image collection to obtain the underexposed image frame. The target contour information may be used for representing the target contour including the target region.

In this solution, by adopting this configuration, in the case where the image collector has a poor recognition ability of the target region, the position of the target region in the underexposed image frame can be predicted quickly according to the historical image frame and the image frame adjacent to the historical image frame.

Embodiment two

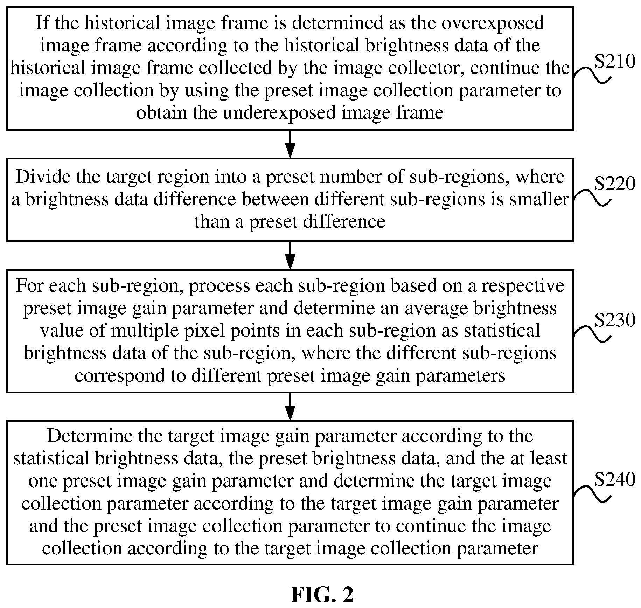

FIG. 2 is a flowchart of an image processing method according to embodiment two of the present application. This embodiment is described based on the preceding embodiment. Processing the target region of the underexposed image frame based on the at least one preset image gain parameter and determining the statistical brightness data of the target region processed based on the at least one preset image gain parameter include dividing the target region into a preset number of sub-regions, where a brightness data difference between different sub-regions is smaller than a preset difference; for each sub-region, processing each sub-region based on a respective preset image gain parameter and determining an average brightness value of multiple pixel points in each sub-region as statistical brightness data of the sub-region, where the different sub-regions correspond to different preset image gain parameters.

As shown in FIG. 2, the method in this embodiment includes the steps below.

In S210, if the historical image frame is determined as the overexposed image frame according to the historical brightness data of the historical image frame collected by the image collector, the image collection is continued by using the preset image collection parameter to obtain the underexposed image frame.

In S220, the target region is divided into a preset number of sub-regions, where a brightness data difference between different sub-regions is smaller than a preset difference.

The preset number may refer to a preset division number for the target region. The preset number of sub-regions may refer to a block region obtained after the target region is divided. The brightness data difference between the different sub-regions is smaller than the preset difference, that is, the different sub-regions have similar or the same brightness. The preset difference may be a value preset according to the actual conditions and may be a critical value for distinguishing whether brightness data of the different sub-regions is similar or the same. In this embodiment, the division number and division method of the target region are not limited and may be configured according to the actual requirements. Exemplarily, the target region may be divided into n sub-regions along the horizontal direction, and the brightness data of the different sub-regions should be ensured to be the same. The target region may also be divided into n sub-regions along the vertical direction, and the brightness data of the different sub-regions should be ensured to be the same. The target region may also be divided into (n1 × n2 = n) sub-regions distributed in a matrix form, and the brightness data of the different sub-regions should be ensured to be the same.

In S230, for each sub-region, each sub-region is processed based on a respective preset image gain parameter, and an average brightness value of multiple pixel points in each sub-region is determined as statistical brightness data of the sub-region, where the different sub-regions correspond to different preset image gain parameters.

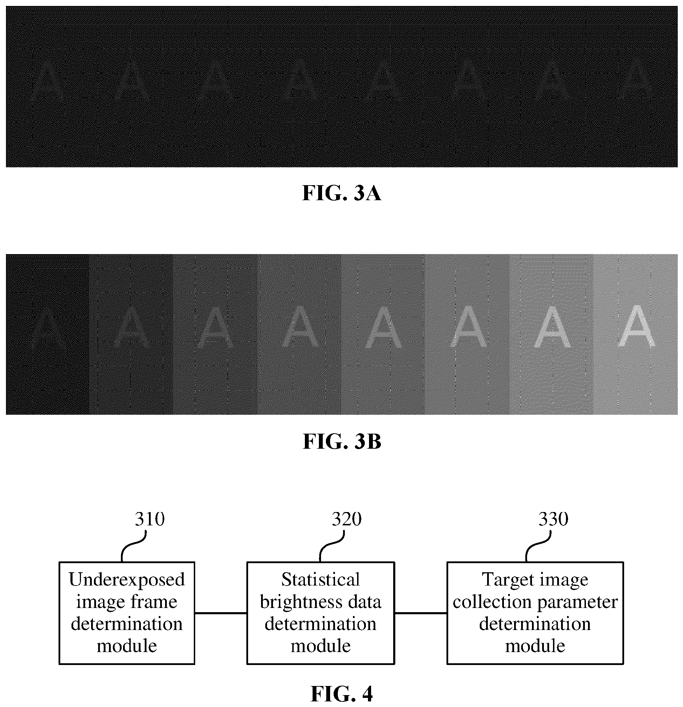

In this embodiment, the different sub-regions are processed by using the different preset image gain parameters. FIG. 3A is a schematic diagram of a target region in an underexposed image frame according to embodiment two of the present application. FIG. 3B is a schematic diagram of a target region after sub-region processing according to embodiment two of the present application. The target regions in FIGS. 3A and 3B are the same, that is, FIG. 3B is a schematic diagram obtained after sub-region processing is performed on the target region in FIG. 3A by using the different preset image gain parameters. As shown in FIGS. 3A and 3B, the target region is divided into eight sub-regions in the horizontal direction, and the brightness data of the different sub-regions before processing is the same (referring to FIG. 3A), and the brightness data of the different sub-regions after processing is different (referring to FIG. 3B). In FIG. 3B, preset image gain parameters are sequentially added for processing the eight sub-regions from left to right in the horizontal direction, so the brightness of the eight sub-regions also increases sequentially from left to right after processing.

After each sub-region of the target region is processed, the average brightness value of the multiple pixel points in each sub-region may be determined as the statistical brightness data of each sub-region. Exemplarily, the statistical brightness data of each sub-region may be calculated using the following formula: $\bar{y}_n = \frac{\sum_{i=1}^{I} \sum_{j=1}^{J} y_{ij}}{I \times J}$. $\bar{y}_n$ denotes the average brightness value (that is, the statistical brightness data) of an n-th sub-region, $i$ and $j$ denote row and column respectively, $I$ and $J$ denote the maximum row number and the maximum column number of the n-th sub-region respectively, and $y_{ij}$ denotes the brightness of a pixel point located in an n-th row and an n-th column in the n-th sub-region. In S240, the target image gain parameter is determined according to the statistical brightness data, the preset brightness data, and the at least one preset image gain parameter, and the target image collection parameter is determined according to the target image gain parameter and the preset image collection parameter to continue the image collection according to the target image collection parameter.

In an embodiment, determining the target image gain parameter according to the statistical brightness data, the preset brightness data, and the at least one preset image gain parameter includes determining a difference between each of pieces of the statistical brightness data and the preset brightness data; using statistical brightness data corresponding to the minimum difference as target brightness data and determining the target image gain parameter according to a preset image gain parameter corresponding to the target brightness data.

In this embodiment, when the target image gain parameter is determined, the difference between each of pieces of the statistical brightness data and the preset brightness data is first determined, and then the statistical brightness data corresponding to the minimum difference is selected as the target brightness data so that the target image gain parameter can be determined according to the preset image gain parameter corresponding to the target brightness data. In an embodiment, determining the target image gain parameter according to the preset image gain parameter corresponding to the target brightness data includes using the preset image gain parameter corresponding to the target brightness data as the target image gain parameter; or determining the ratio of the preset brightness data to the target brightness data and using the product of the ratio and the preset image gain parameter corresponding to the target brightness data as the target image gain parameter.

In this embodiment, the preset image gain parameter corresponding to the target brightness data may be directly determined as the target image gain parameter so that the target image gain parameter can be determined quickly. The target image gain parameter may also be determined according to the ratio of the preset brightness data to the target brightness data. The ratio of the preset brightness data to the target brightness data is first determined, then the ratio is multiplied by the preset image gain parameter corresponding to the target brightness data, and the product result is used as the target image gain parameter so that the target image gain parameter can be consistent with the preset image gain parameter, thereby improving the accuracy of the image exposure adjustment. In this embodiment, the preceding two manners for determining the target image gain parameter are not limited and may be flexibly selected according to the actual requirements.

In this solution, by adopting this configuration, the efficiency and accuracy of the image exposure adjustment can be well considered, thereby better meeting the actual application requirements.

In this embodiment, after the target image gain parameter is determined, the target image collection parameter can be determined according to the target image gain parameter and the preset image collection parameter to continue the image collection according to the target image collection parameter. Assuming that the target image gain parameter is $n \times G$, the average brightness values before and after sub-region processing are $\bar{y}$ and $\bar{y}_n$ respectively, and the ideal brightness of the target region after exposure adjustment is $\bar{y}_{next}$, so $\bar{y}_n = n \times G \times \bar{y} \approx \bar{y}_{next}$. $G$ denotes the minimum preset image gain parameter.

$\quad \bar{y} = \int_0^{t_{def}} Gain_{def} \times Iris_{def} \times \bar{F} dt$, and $\quad \bar{y}_{next} = \int_0^{t} Gain \times Iris \times \bar{F} dt$. $t_{def}$, $Gain_{def}$, and $Iris_{def}$ denote the preset shutter speed, the preset image sensor gain, and the preset aperture number respectively. $t$, $Gain$, and $Iris$ denote the target shutter speed, the target image sensor gain, and the target aperture number respectively. $\bar{F}$ denotes the average ambient light. In this manner, the following formula may be obtained:

$$\bar{y}_n = n \times G (\int_0^{t_{def}} Gain_{def} \times Iris_{def} \times \bar{F} dt) \approx \int_0^{t} Gain \times Iris \times \bar{F} dt.$$

Since the ambient light usually does not change during the shutter speed, it can be considered that the ambient light does not vary over time, that is, $\bar{F}$ is a constant. Therefore, the following formula may be obtained: $t \times Gain \times Iris \approx n \times G \times t_{def} \times Gain_{def} \times Iris_{def}$.

Therefore, the at least one of the preset shutter speed, the preset image sensor gain, or the preset aperture number may be adjusted to obtain the target shutter speed, the target image sensor gain, and the target aperture number to make the product of the target shutter speed, the target image sensor gain, and the target aperture number equal the product of the target image gain parameter, the preset shutter speed, the preset image sensor gain, and the preset aperture number. Exemplarily, it can be configured that $Gain = Gain_{def}$ and $Iris = Iris_{def}$; in this case, it is merely required to adjust $t = n \times G \times t_{def}$ to obtain the target image collection parameter.In the technical solutions provided in the embodiments of the present application, the target region is divided into the preset number of sub-regions, where the brightness data difference between the different sub-regions is smaller than the preset difference; for each sub-region, each sub-region is processed based on the respective preset image gain parameter, and the average brightness value of the multiple pixel points in each sub-region is determined as the statistical brightness data of each sub-region, where the different sub-regions correspond to the different preset image gain parameters. In this technical solution, the accurate exposure of the next frame of image can be determined through the single underexposed image frame, without multiple feedback and adjustment processes, improving the accuracy of the image exposure adjustment on the basis of improving the efficiency of the image exposure adjustment.

Embodiment three

FIG. 4 is a schematic diagram illustrating the structure of an image processing apparatus according to embodiment three of the present application. The apparatus may perform the image processing method provided in any embodiment of the present application and has functional modules and beneficial effects that correspond to the performed method. As shown in FIG. 4, the apparatus includes an underexposed image frame determination module 310, a statistical brightness data determination module 320, and a target image collection parameter determination module 330.

The underexposed image frame determination module 310 is configured to, if a historical image frame is determined as an overexposed image frame according to historical brightness data of the historical image frame collected by an image collector, continue image collection by using a preset image collection parameter to obtain an underexposed image frame. The statistical brightness data determination module 320 is configured to process a target region of the underexposed image frame based on at least one preset image gain parameter and determine statistical brightness data of the target region processed based on the at least one preset image gain parameter. The target image collection parameter determination module 330 is configured to determine a target image gain parameter according to the statistical brightness data, preset brightness data, and the at least one preset image gain parameter and determine a target image collection parameter according to the target image gain parameter and the preset image collection parameter to continue the image collection according to the target image collection parameter.

In an embodiment, the statistical brightness data determination module 320 is configured to traverse the at least one preset image gain parameter and in the traversal process, process the target region of the underexposed image frame based on each preset image gain parameter; and determine an average brightness value of multiple pixel points in the target region processed based on each preset image gain parameter as the statistical brightness data of the target region processed based on each preset image gain parameter.

In an embodiment, the statistical brightness data determination module 320 is further configured to divide the target region into a preset number of sub-regions, where a brightness data difference between different sub-regions is smaller than a preset difference; for each sub-region, process each sub-region based on a respective preset image gain parameter and determine an average brightness value of multiple pixel points in each sub-region as statistical brightness data of the sub-region, where the different sub-regions correspond to different preset image gain parameters.

In an embodiment, the target image collection parameter determination module 330 includes a brightness difference determination unit and a target image gain parameter determination unit.

The brightness difference determination unit is configured to determine a difference between each of pieces of the statistical brightness data and the preset brightness data. The target image gain parameter determination unit is configured to use statistical brightness data corresponding to the minimum difference as target brightness data and determine the target image gain parameter according to a preset image gain parameter corresponding to the target brightness data.

In an embodiment, the target image gain parameter determination unit is configured to use the preset image gain parameter corresponding to the target brightness data as the target image gain parameter; or determine the ratio of the preset brightness data to the target brightness data and use the product of the ratio and the preset image gain parameter corresponding to the target brightness data as the target image gain parameter.

In an embodiment, target image collection parameters include a target shutter speed, a target image sensor gain, and a target aperture number, and preset image collection parameters include a preset shutter speed, a preset image sensor gain, and a preset aperture number. The target image collection parameter determination module 330 is configured to adjust at least one of the preset shutter speed, the preset image sensor gain, or the preset aperture number to obtain the target shutter speed, the target image sensor gain, and the target aperture number to enable the product of the target shutter speed, the target image sensor gain, and the target aperture number to be equal to the product of the target image gain parameter, the preset shutter speed, the preset image sensor gain, and the preset aperture number.

In an embodiment, the determination process of the target region of the underexposed image frame includes determining the moving speed of a target region in the historical image frame according to the historical image frame and an image frame adjacent to the historical image frame; predicting the position of the target region in the underexposed image frame according to the moving speed and one of the position of the target region in the historical image frame or the position of the target region in the image frame adjacent to the historical image frame, where the underexposed image frame is an image frame after the historical image frame and the image frame adjacent to the historical image frame.

The image processing apparatus provided in the embodiment of the present application may perform the image processing method provided in any embodiment of the present application and has functional modules and effects that correspond to the performed method.

Embodiment four

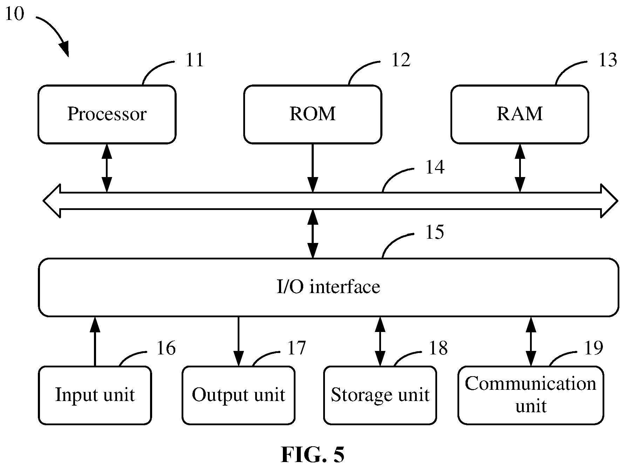

FIG. 5 is a schematic diagram illustrating the structure of an electronic device for implementing embodiments of the present application. Electronic devices 10 are intended to represent various forms of digital computers, for example, laptop computers, desktop computers, worktables, personal digital assistants, servers, blade servers, mainframe computers, and other applicable computers. The electronic devices 10 may also represent various forms of mobile apparatuses, for example, personal digital assistants, cellphones, smartphones, wearable devices (such as helmets, glasses, or watches), or other similar computing apparatuses. Herein the shown components, the connections and relationships between these components, and the functions of these components are illustrative and are not intended to limit the implementation of the present application as described and/or claimed herein.

As shown in FIG. 5, the electronic device 10 includes at least one processor 11 and a memory communicatively connected to the at least one processor 11, such as a read-only memory (ROM) 12 and a random-access memory (RAM) 13. The memory stores a computer program executable by the at least one processor. A processor 11 may perform various appropriate actions and processing according to a computer program stored in the ROM 12 or a computer program loaded into the RAM 13 from a storage unit 18. The RAM 13 may also store various programs and data required for the operation of the electronic device 10. The processor 11, the ROM 12, and the RAM 13 are connected to each other through a bus 14. An input/output (I/O) interface 15 is also connected to the bus 14.

Multiple components in the electronic device 10 are connected to the I/O interface 15. The multiple components include input units 16 such as a keyboard and a mouse, output units 17 such as various types of displays and speakers, the storage unit 18 such as a magnetic disk or an optical disk, and a communication unit 19 such as a network card, a modem, or a wireless communication transceiver. The communication unit 19 allows the electronic device 10 to exchange information/data with other devices over a computer network such as the Internet and/or various telecommunications networks.

The at least one processor 11 may be various general-purpose and/or special-purpose processing components having processing and computing capabilities. Examples of the processor 11 include, but are not limited to, a central processing unit (CPU), a graphics processing unit (GPU), a special-purpose artificial intelligence (AI) computing chip, a processor executing machine learning models and algorithms, a digital signal processor (DSP), and any appropriate processor, controller, or microcontroller. The processor 11 performs the various methods and processing described in the preceding, such as the image processing method.

In some examples, the image processing method may be implemented as computer programs tangibly contained in a computer-readable storage medium such as the storage unit 18. In some embodiments, part or all of the computer programs may be loaded and/or installed onto the electronic device 10 via the ROM 12 and/or the communication unit 19. When the computer programs are loaded to the RAM 13 and executed by the processor 11, one or more steps of the preceding image processing method may be performed. In other embodiments, the processor 11 may be configured, in any other suitable manner (for example, by means of firmware), to perform the image processing method.

The various embodiments of the systems and techniques described herein may be implemented in digital electronic circuitry, integrated circuitry, a field-programmable gate array (FPGA), an application-specific integrated circuit (ASIC), application specific standard parts (ASSP), a system on a chip (SoC), a complex programmable logic device (CPLD), computer hardware, firmware, software, and/or a combination thereof. The various embodiments may include implementations in one or more computer programs. The one or more computer programs are executable and/or interpretable on a programmable system including at least one programmable processor. A programmable processor may be a special-purpose or general-purpose programmable processor for receiving data and instructions from a memory system, at least one input apparatus, and at least one output apparatus and transmitting data and instructions to the memory system, the at least one input apparatus, and the at least one output apparatus.

Computer programs for implementation of the methods of the present application may be written in one programming language or any combination of multiple programming languages. The computer programs may be provided for a processor of a general-purpose computer, a special-purpose computer, or another programmable data processing apparatus to enable functions/operations specified in a flowchart and/or a block diagram to be implemented when the computer programs are executed by the processor. The computer programs may be executed entirely on a machine, partly on a machine, as a stand-alone software package, partly on a machine and partly on a remote machine, or entirely on a remote machine or a server.

In the context of the present application, the computer-readable storage medium may be a tangible medium that may include or store a computer program for use by or in connection with an instruction execution system, apparatus, or device. The computer-readable storage medium may include, but is not limited to, an electronic, magnetic, optical, electromagnetic, infrared, or semiconductor system, apparatus, or device, or any appropriate combination thereof. Alternatively, the computer-readable storage medium may be a machine-readable signal medium. Examples of the machine-readable storage medium may include an electrical connection based on one or more wires, a portable computer disk, a hard disk, an RAM, an ROM, an erasable programmable read-only memory (EPROM), a flash memory, an optical fiber, a portable compact disk read-only memory (CD-ROM), an optical memory device, a magnetic memory device, or any suitable combination thereof.

In order to implement interaction with a user, the systems and techniques described herein may be implemented in the electronic device. The electronic device has a display apparatus (for example, a cathode-ray tube (CRT) or a liquid-crystal display (LCD) monitor) for displaying information to the user; and a keyboard and a pointing apparatus (for example, a mouse or a trackball) through which the user can provide input for the electronic device. Other types of apparatuses may also be used for providing interaction with the user. For example, feedback provided for the user may be sensory feedback in any form (for example, visual feedback, auditory feedback, or haptic feedback). Moreover, input from the user may be received in any form (including acoustic input, voice input, or haptic input).

The systems and techniques described herein may be implemented in a computing system including a back-end component (for example, a data server), a computing system including a middleware component (for example, an application server), a computing system including a front-end component (for example, a client computer having a graphical user interface or a web browser through which the user can interact with embodiments of the systems and techniques described herein), or a computing system including any combination of such back-end, middleware, or front-end components. Components of a system may be interconnected by any form or medium of digital data communication (for example, a communication network). Examples of the communication network include a local area network (LAN), a wide area network (WAN), a blockchain network, and the Internet.

The computing system may include clients and servers. A client and a server are generally remote from each other and typically interact through a communication network. The relationship between the client and the server arises by virtue of computer programs running on respective computers and having a client-server relationship to each other. The server may be a cloud server, also referred to as a cloud computing server or a cloud host. As a host product in a cloud computing service system, the server solves the defects of difficult management and weak service scalability in conventional physical host and virtual private server (VPS) services.

Various forms of the preceding flows may be used, with steps reordered, added, or removed. For example, the steps described in the present application may be executed in parallel, in sequence, or in a different order as long as the desired results of the technical solutions in the present application are achieved. The execution sequence of these steps is not limited herein.

## Claims

1.  An image processing method, comprising:

    in a case where a historical image frame is determined as an overexposed image frame according to historical brightness data of the historical image frame collected by an image collector, continuing image collection by using a preset image collection parameter to obtain an underexposed image frame;
    processing a target region of the underexposed image frame based on at least one preset image gain parameter and determining statistical brightness data of the target region processed based on the at least one preset image gain parameter; and
    determining a target image gain parameter according to the statistical brightness data, preset brightness data, and the at least one preset image gain parameter and determining a target image collection parameter according to the target image gain parameter and the preset image collection parameter to continue the image collection according to the target image collection parameter.

2.  The image processing method of claim 1, wherein processing the target region of the underexposed image frame based on the at least one preset image gain parameter and determining the statistical brightness data of the target region processed based on the at least one preset image gain parameter comprise:

    traversing the at least one preset image gain parameter and in a traversal process, processing the target region of the underexposed image frame based on each of the at least one preset image gain parameter; and
    determining an average brightness value of a plurality of pixel points in the target region processed based on each of the at least one preset image gain parameter as the statistical brightness data of the target region processed based on each of the at least one preset image gain parameter.

3.  The image processing method of claim 1, wherein processing the target region of the underexposed image frame based on the at least one preset image gain parameter and determining the statistical brightness data of the target region processed based on the at least one preset image gain parameter comprise:

    dividing the target region into a preset number of sub-regions, wherein a brightness data difference between different sub-regions is smaller than a preset difference; and
    for each sub-region of the preset number of sub-regions, processing each sub-region based on a respective one of the at least one preset image gain parameter and determining an average brightness value of a plurality of pixel points in each sub-region as statistical brightness data of the sub-region, wherein the different sub-regions correspond to different preset image gain parameters.

4.  The image processing method of any one of claims 1 to 3, wherein determining the target image gain parameter according to the statistical brightness data, the preset brightness data, and the at least one preset image gain parameter comprises:

    determining a difference between each of pieces of the statistical brightness data and the preset brightness data; and
    using statistical brightness data corresponding to a minimum difference as target brightness data and determining the target image gain parameter according to a preset image gain parameter corresponding to the target brightness data.

5.  The image processing method of claim 4, wherein determining the target image gain parameter according to the preset image gain parameter corresponding to the target brightness data comprises:

    using the preset image gain parameter corresponding to the target brightness data as the target image gain parameter; or
    determining a ratio of the preset brightness data to the target brightness data and using a product of the ratio and the preset image gain parameter corresponding to the target brightness data as the target image gain parameter.

6. The image processing method of claim 1, wherein the target image collection parameter comprises a target shutter speed, a target image sensor gain, and a target aperture number, and the preset image collection parameter comprises a preset shutter speed, a preset image sensor gain, and a preset aperture number; and
wherein determining the target image collection parameter according to the target image gain parameter and the preset image collection parameter comprises:
adjusting at least one of the preset shutter speed, the preset image sensor gain, or the preset aperture number to obtain the target shutter speed, the target image sensor gain, and the target aperture number to enable a product of the target shutter speed, the target image sensor gain, and the target aperture number to be equal to a product of the target image gain parameter, the preset shutter speed, the preset image sensor gain, and the preset aperture number.

7. The image processing method of claim 1, wherein a determination process of the target region of the underexposed image frame comprises:

determining a moving speed of a target region in the historical image frame according to the historical image frame and an image frame adjacent to the historical image frame; and
predicting a position of the target region in the underexposed image frame according to the moving speed and one of a position of the target region in the historical image frame or a position of the target region in the image frame adjacent to the historical image frame, wherein the underexposed image frame is an image frame after the historical image frame and the image frame adjacent to the historical image frame.

8. An image processing apparatus, comprising:

an underexposed image frame determination module configured to, in a case where a historical image frame is determined as an overexposed image frame according to historical brightness data of the historical image frame collected by an image collector, continue image collection by using a preset image collection parameter to obtain an underexposed image frame;
a statistical brightness data determination module configured to process a target region of the underexposed image frame based on at least one preset image gain parameter and determine statistical brightness data of the target region processed based on the at least one preset image gain parameter; and
a target image collection parameter determination module configured to determine a target image gain parameter according to the statistical brightness data, preset brightness data, and the at least one preset image gain parameter and determine a target image collection parameter according to the target image gain parameter and the preset image collection parameter to continue the image collection according to the target image collection parameter.

9. An image processing electronic device, comprising:

at least one processor; and
a memory communicatively connected to the at least one processor,
wherein the memory is configured to store a computer program executable by the at least one processor to cause the at least one processor to perform the image processing method of any one of claims 1 to 7.

10. A computer-readable storage medium storing computer instructions that, when executed by a processor, are configured to cause the processor to perform the image processing method of any one of claims 1 to 7.

S110

If a historical image frame is determined as an overexposed image frame according to historical brightness data of the historical image frame collected by an image collector, continue image collection by using a preset image collection parameter to obtain an underexposed image frame

S120

Process a target region of the underexposed image frame based on at least one preset image gain parameter and determine statistical brightness data of the target region processed based on the at least one preset image gain parameter

S130

Determine a target image gain parameter according to the statistical brightness data, preset brightness data, and the at least one preset image gain parameter and determine a target image collection parameter according to the target image gain parameter and the preset image collection parameter to continue the image collection according to the target image collection parameter

**FIG. 1**

If the historical image frame is determined as the overexposed image frame according to the historical brightness data of the historical image frame collected by the image collector, continue the image collection by using the preset image collection parameter to obtain the underexposed image frame ∼S210

Divide the target region into a preset number of sub-regions, where a brightness data difference between different sub-regions is smaller than a preset difference ∼S220

For each sub-region, process each sub-region based on a respective preset image gain parameter and determine an average brightness value of multiple pixel points in each sub-region as statistical brightness data of the sub-region, where the different sub-regions correspond to different preset image gain parameters ∼S230

Determine the target image gain parameter according to the statistical brightness data, the preset brightness data, and the at least one preset image gain parameter and determine the target image collection parameter according to the target image gain parameter and the preset image collection parameter to continue the image collection according to the target image collection parameter ∼S240

**FIG. 2**

FIG. 3A

FIG. 3B

310 320 330

| Underexposed image frame determination module | Statistical brightness data determination module | Target image collection parameter determination module |

FIG. 4

10

11 Processor

12 ROM

13 RAM

14

15 I/O interface

16 Input unit

17 Output unit

18 Storage unit

19 Communication unit

**FIG. 5**

## INTERNATIONAL SEARCH REPORT

| International application No. |
| --- |
| **PCT/CN2023/096994** |

| A. | CLASSIFICATION OF SUBJECT MATTER |
| --- | --- |

G06T5/00(2006.01)i

According to International Patent Classification (IPC) or to both national classification and IPC

| B. | FIELDS SEARCHED |
| --- | --- |

Minimum documentation searched (classification system followed by classification symbols)

IPC: G06T,H04N

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 图像, 采集, 参数, 曝光, 过曝, 欠曝, 增益, 目标区域, 亮度, 调整, image, capture, parameter, exposure, over exposure, under exposure, gain, target area, brightness, adjust

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 108335272 A (QINGDAO HISENCE MOBILE COMMUNICATIONS TECHNOLOGY CO., LTD.) 27 July 2018 (2018-07-27)<br>description, paragraphs 0030-0042, and figure 1 | 1-10 |
| A | CN 111698432 A (BEIJING ORIONSTAR TECHNOLOGY CO., LTD.) 22 September 2020 (2020-09-22)<br>entire document | 1-10 |
| A | CN 114449175 A (ROCKCHIP ELECTRONICS CO., LTD.) 06 May 2022 (2022-05-06)<br>entire document | 1-10 |
| A | US 2020036882 A1 (QUALCOMM INC.) 30 January 2020 (2020-01-30)<br>entire document | 1-10 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **31 August 2023** | **08 September 2023** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/096994**

| Patent document cited in search report | | | Publication date (day/month/year) | Patent family member(s) | Publication date (day/month/year) |
|---|---|---|---|---|---|
| CN | 108335272 | A | 27 July 2018 | None | |
| CN | 111698432 | A | 22 September 2020 | None | |
| CN | 114449175 | A | 06 May 2022 | None | |
| US | 2020036882 | A1 | 30 January 2020 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211414884